(19) **Europäisches Patentamt**

**European Patent Office**

**Office européen des brevets**

(11) Numéro de publication: **0 431 987 A2**

# (12) DEMANDE DE BREVET EUROPEEN

(21) Numéro de dépôt: **90402903.0**

(22) Date de dépôt: **16.10.90**

(51) Int. Cl.5: **A23L 1/217**

(30) Priorité: **17.11.89 FR 8915129**

(43) Date de publication de la demande:
**12.06.91 Bulletin 91/24**

(84) Etats contractants désignés:
**BE DE ES FR GB LU NL**

(71) Demandeur: **COOPERATIVE AGRICOLE DE CONDITIONNEMENT DE VIC SUR AISNE MONTIGNY-LENGRAIN**

**F-02290 Vic sur Aisne(FR)**

(72) Inventeur: **Tricoit, Jean**
**7, rue Léon Caillez**
**02200 Soissons(FR)**

(74) Mandataire: **Lanceplaine, Jean-Claude et al CABINET LAVOIX 2, Place d'Estienne d'Orves**
**F-75441 Paris Cédex 09(FR)**

(54) **Procédé de préparation de tranches croustillantes de pommes de terre et produit alimentaire obtenu selon ce procédé.**

(57) L'invention a pour objet un procédé de préparation de tranches croustillantes de pommes de terre dans lequel on coupe en tranches les pommes de terre préalablement épluchées, on lave une première fois les tranches, on trempe les tranches dans un bain osmotique formé par une solution contenant notamment des agents stabilisant la croustillance et la couleur des tranches, on lave une seconde fois les tranches, on effectue un balayage à l'air des tranches pour éliminer l'eau superficielle, on effectue une friture des tranches, on réalise un égouttage des tranches frites, et on conditionne lesdites tranches ainsi préparées.

La présente invention a pour objet un procédé de préparation de tranches croustillantes à base de pommes de terre.

L'invention couvre également le produit alimentaire préparé selon ce procédé.

On connait des procédés de préparation de produits alimentaires à base de pommes de terre qui consistent tout d'abord à éplucher les pommes de terre, à les découper en lamelles, puis à les frire dans un bain d'huile pour réaliser un produit possédant la propriété d'être croustillant.

Mais, ces procédés classiques ne permettent pas d'atteindre la croustillance souhaitée quand les matières sèches de la pomme de terre sont trop basses.

Un objet de la présente invention est de mettre en oeuvre un nouveau procédé industriel permettant de régler à volonté et de stabiliser la croustillance, ainsi que la couleur du produit malgré les variations de la matière première c'est à dire des pommes de terre.

Le procédé selon l'invention consiste :
- à couper en tranches les pommes de terre préalablement épluchées,
- à laver une première fois les tranches,
- à tremper les tranches dans un bain osmotique formé par une solution contenant notamment des agents stabilisant la croustillance et la couleur des tranches,
- à laver une deuxième fois les tranches,
- à effectuer un balayage à l'air desdites tranches pour éliminer l'eau superficielle,
- à effectuer une friture des tranches, à réaliser un égouttage des tranches frites,
- et à conditionner lesdites tranches ainsi préparées.

Selon d'autres caractéristiques de l'invention,
- on effectue un blanchiment des tranches avant le trempage desdites tranches dans le bain osmotique,
- on effectue un blanchiment des tranches en même temps que le trempage desdites tranches dans le bain osmotique,
- on effectue un blanchiment des tranches après le trempage desdites tranches dans le bain osmotique,
- les agents stabilisant la croustillance sont constitués par du glucono-delta-lactone et des pectines,
- les agents stabilisant la couleur sont constitués par des malto-dextrines,
- la solution du bain osmotique contient également de l'acide ascorbique, de l'acide citrique, du sel soluble alimentaire contenant du calcium et un émulsifiant,
- la température de la solution du bain osmotique est comprise entre 15 et 80° C,
- le temps de séjour des tranches dans la solution du bain osmotique est comprise entre 1,5 et minutes.

La présente invention a également pour objet un produit croustillant à base de pommes de terre obtenu par ce procédé.

L'invention sera décrite plus en détail dans ce qui suit.

Le procédé selon l'invention consiste tout d'abord à couper en tranches les pommes de terre préalablement épluchées.

Ces tranches peuvent être découpées selon une forme quelconque, par exemple parallélépipédique, ovale, ou encore suivant un losange.

Les tranches sont lavées une première fois, puis trempées dans un bain osmotique.

Ce bain osmotique est constitué par une solution contenant notamment des agents stabilisant la croustillance et la couleur des tranches afin d'obtenir des produits de qualité identique malgré les variations de la matière première c'est à dire des différentes variétés de pommes de terre.

Les agents stabilisant la croustillance sont constitués par exemple par du glucono-delta-lactone et des pectines et les agents stabilisant la couleur sont constitués par exemple par des malto-dextrines.

La solution du bain osmotique contient également de l'acide ascorbique, de l'acide citrique, du sel soluble alimentaire contenant du calcium et un émulsifiant tel qu'un monoglycéride.

Le sel soluble alimentaire est formé par du chlorure de calcium, ou du lactate de calcium ou du citrate de calcium ou de l'acétate de calcium ou encore de l'orthophosphate de calcium.

La température de la solution du bain osmotique est comprise entre 15 et 80° C et le temps de séjour des tranches dans cette solution est compris entre 1,5 et 15 minutes.

Afin d'améliorer la couleur des tranches, une opération de blanchiment desdites tranches peut être effectuée, soit avant le trempage des tranches dans le bain, soit en même temps que le trempage dans ledit bain, ou soit après le trempage.

Le pourcentage des différents constituants de la solution du bain osmotique ainsi que la température et le temps de passage des tranches sont déterminés en fonction de la qualité et de la variété des pommes de terre et permettent de pouvoir régler à volonté et stabiliser la croustillance, c'est à dire la dureté des tranches, ainsi que la couleur de ces tranches.

L'acide joue le rôle de dissociation du sel de calcium et améliore la couleur du produit, tandis que le sel intervient également sur la régulation de la couleur. L'émulsifiant permet d'accélérer l'action des agents stabilisant la croustillance et la couleur.

Ensuite, les tranches sont lavées une seconde fois et on effectue un balayage à l'air desdites tranches pour éliminer l'eau superficielle.

Après ces différents traitements, on effectue une friture des tranches par exemple dans un bain d'huile à une température supérieure à 145°C pendant 3 à 8 minutes.

Les tranches ainsi préparées sont ensuite égouttées et emballées en vrac par exemple dans des sachets souples.

Le procédé selon l'invention, permet d'obtenir un produit alimentaire à base de pommes de terre possédant comme propriétés d'être notamment croustillant et friable et surtout de pouvoir régler à volonté et stabiliser cette croustillance ainsi que la couleur du produit et cela quelque soit le pourcentage des matières sèches dans les pommes de terre.

**Revendications**

1. Procédé de préparation de tranches croustillantes de pommes de terre dans lequel on épluche les pommes de terre, on coupe en tranches les pommes de terre épluchées et on lave une première fois les tranches, caractérisé en ce que :
- on trempe les tranches dans un bain osmotique formé par une solution contenant notamment des agents stabilisant la croustillance et la couleur des tranches,
- on lave une seconde fois les tranches,
- on effectue un balayage à l'air des tranches pour éliminer l'eau superficielle,
- on effectue une friture des tranches,
- on réalise un égouttage des tranches frites,
- et on conditionne lesdites tranches ainsi préparées.

2. Procédé selon la revendication 1, caractérisé en ce qu'on effectue un blanchiment des tranches avant le trempage desdites tranches dans le bain osmotique.

3. Procédé selon la revendication 1, caractérisé en ce qu'on effectue un blanchiment des tranches en même temps que le trempage desdites tranches dans le bain osmotique.

4. Procédé selon la revendication 1, caractérisé en ce qu'on effectue un blanchiment des tranches après le trempage desdites tranches dans le bain osmotique.

5. Procédé selon l'une quelconque des revendications 1 à 4, caractérisé en ce que les agents stabilisant la croustillance sont constitués par du glucono-delta-lactone et des pectines.

6. Procédé selon l'une quelconque des revendications 1 à 4, caractérisé en ce que les agents stabilisant la couleur sont constitués par des maltodextrines.

7. Procédé selon l'une quelconque des revendications 1 à 4, caracatérisé en ce que la solution du bain osmotique contient également de l'acide ascorbique, de l'acide citrique, du sel soluble alimentaire contenant du calcium et un émulsifiant.

8. Procédé selon la revendication 7, caractérisé en ce que le sel soluble alimentaire est formé par du chlorure de calcium, ou du lactate de calcium, ou du citrate de calcium, ou de l'acétate de calcium ou de l'orthophosphate de calcium.

9. Procédé selon l'une quelconque des revendications précédentes, caractérisé en ce que la température de la solution du bain osmotique est comprise entre 15 et 80°C.

10. Procédé selon l'une quelconque des revendications précédentes, caractérisé en ce que le temps de séjour des tranches dans la solution du bain osmotique est compris entre 1,5 et 15 minutes.

11. Procédé selon la revendication 1, caractérisé en ce que la friture des tranches est réalisée à une température supérieure à 145°C pendant 3 à 8 minutes.

12. Produit alimentaire croustillant à base de pommes de terre obtenu par le procédé selon l'une quelconque des revendications précédentes.

13. Produit alimentaire selon la revendication 12, caractérisé en ce qu'il a une forme sensiblement parallèlèpipèdique.

14. Produit alimentaire selon la revendication 12, caractérisé en ce qu'il a une forme correspondant sensiblement à un losange.